# EUROPEAN PATENT SPECIFICATION

(11) **EP 4 002 686 B1**
(45) Date of publication and mention of the grant of the patent: **31.05.2023**
(21) Application number: 20383018.7
(22) Date of filing: 23.11.2020
(51) Int. Cl.: H02S 20/32, H01Q 1/00

(54) **TRACKER CONTROLLER FOR A PHOTOVOLTAIC INSTALLATION**
VERFOLGERSTEUERGERÄT FÜR PHOTOVOLTAIKANLAGE
CONTRÔLEUR DE SUIVEUR POUR INSTALLATION PHOTOVOLTAÏQUE

(43) Date of publication of application: 25.05.2022
(73) Proprietor: Soltec Innovations, S.L., 30500 Molina de Segura (ES)
(72) Inventor: Chaouki Almagro, Samir, 30500 Murcia (ES); GARCÍA CAPITÁN, SANTIAGO, 30500 Murcia (ES)
(74) Representative: Isern Patentes y Marcas S.L.

(56) References cited:
- EP-A1- 3 565 110
- EP-B1- 3 565 110
- WO-A1-2012/096196
- KR-Y1- 200 455 815
- US-A1- 2012 072 041
- US-A1- 2013 006 435

## Description

### Technical field of the invention

The present invention belongs to the technical field of solar energy, in particular to solar trackers, for providing rotation to a module of solar panels for sun-tracking. More particularly, the object of the invention relates to a tracker controller for a solar installation comprising an external antenna which is easily orientable in vertical direction.

### Background of the invention (state of the art)

A solar tracker of a photovoltaic installation comprises a controller. The controller comprises a box and a communications system housed within the box. An external antenna may be externally attached to the box of the controller. Such a controller is known for instance from the document US2012072041A1.

It is known that the antenna provides an optimized electromagnetic radiation spectrum when the antenna is oriented in vertical direction pointing downwards.

However, the movement of the tracker and the effect of the wind negatively affect the orientation of the antenna.

### Summarized description of the invention

The tracker controller of the present invention allows, as will be explained below, the external antenna to stay in a vertical orientation pointing downwards, irrespective of the angular position of the solar tracker and the speed of wind, according to the independent claim. The dependent claims describe preferred embodiments of the invention.

### Brief description of the drawings

The advantages mentioned above, as well as other advantages and features of the present invention, shall be better understood with reference to the following detailed description of a preferred embodiment of the invention, with due regard to the attached set of figures, which are to be construed in an illustrative, non-limitative manner, and wherein:
Figure 1 shows a schematic side view of a photovoltaic installation comprising the tracker controller of the present invention.
Figure 2 shows a detailed side view of the antenna making part of the tracker controller.
Figures 3A and 3B show the antenna with the protrusion thereof bumping against the box, both in front view (see figure 3A) and in rear view (see figure 3B).
Figure 4 shows a detailed side view of the protrusion of the antenna bumping against the box.

### Detailed description of a preferred embodiment of the invention

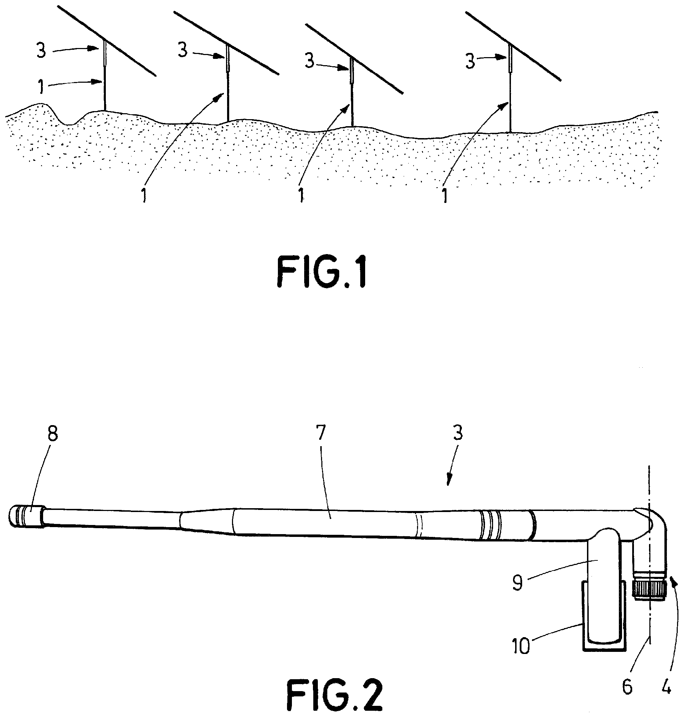

Next a detailed description of a preferred embodiment of the tracker controller of the invention shall be provided, with the help of figures 1-4 mentioned above.

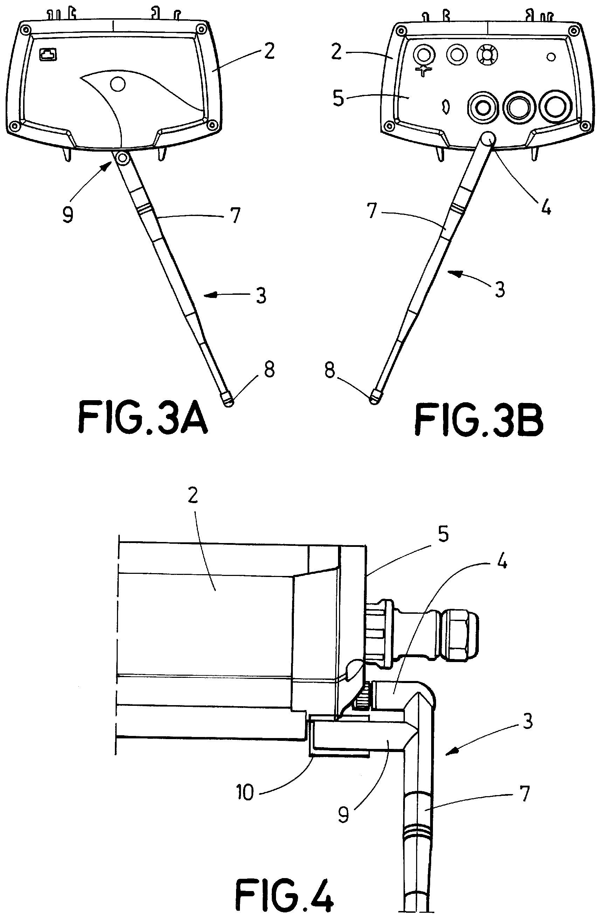

Figure 1 schematically shows a photovoltaic installation comprising a plurality of solar trackers (1). Each solar tracker (1) comprises a tracking structure so as to support solar panels of the solar installation, and provide the solar panels with a tracking rotation for sun tracking, as is well known in the state of the art. The solar tracker (1) also comprises a tracker controller for controlling the tracking rotation and communicate the solar trackers (1) to each other. The tracker controller comprises a box (2), attached to the tracking structure, and a communications system housed within the box (2). At least one of the tracker controllers further comprises an external antenna (3) for the communications system, which is externally connected to the corresponding box (2), by a connection (4), at a lower portion of said box (2), preferably at a lower portion of a front or rear cover (5) of the box (2), see figures 3B and 4, the antenna (3) being freely rotatable with respect to the box (2) around a rotation axis (6).

More particularly, as shown on figure 2, the antenna (3) comprises an elongated casing pipe (7), at one free end of which there is a tip (8) of the antenna (3), and wherein at an opposite end thereof there is the rotatory connection (4) which is angled, preferably right-angled, with respect to the casing pipe (7). The antenna (3) further comprises a protrusion (9), extending from the casing pipe (7) near the connection (4), and which is configured so as to bump with the box (2), when the antenna (3) rotates.

The free rotation of the antenna (3) with respect to the box (2), provided by the connection (4), together with the action of gravity, allows the antenna (3) to by default stay oriented along a vertical direction, the tip (8) of the antenna (3) pointing downwards, an therefore the connection (4) pointing upwards, irrespective of the position of the tracking structure, at least in absence of wind.

In conditions of strong wind, the wind makes the antenna (3) to rotate, by means of the connection (4), so that the antenna (3) adopts an inclined position, which may negatively affect performance of the antenna (3). However, as the protrusion (9) bumps against the box (2), rotation of the antenna (3) is limited, so that the antenna (3) does not deviate from the vertical orientation, on both directions of rotation, more than a predetermined amount which depends upon the position and the dimensions of the protrusion (9).

So that collision of the protrusion (9) against the box (2) does not cause damage to the antenna (3), the protrusion (9) may be provided with a bumper (10), such as a cover, made of a shock absorbing material, such as rubber or similar.

## Claims

1. Tracker controller for a photovoltaic installation, the tracker controller comprising:
- a box (2) intended to be attached to a tracking structure of a photovoltaic tracker (1) of the installation;
- a communications system housed within the box (2), intended to communicate the trackers (1) to each other; and
- an external antenna (3) for the communications system, the antenna (3) comprising:
- an elongated casing pipe (7), and
- a rotatory connection (4) at one end of the casing pipe (7), externally connecting the casing pipe (7) to a lower portion of the box (2), so as to allow the casing pipe (7) to freely rotate with respect to the box (2) around a rotation axis (6);
the controller being **characterized by** the antenna (3) further comprising a protrusion (9), extending from the casing pipe (7) near the connection (4), and which is configured so as to bump with the box (2), when the antenna (3) rotates, for limiting rotation of the casing pipe (7).

2. Tracker controller according to claim 1, wherein the connection (4) is connected to a lower portion of a front or rear cover (5) of the box (2).

3. Tracker controller according to anyone of claims 1-2, wherein the connection (4) is angled with respect to the casing pipe (7).

4. Tracker controller according to claim 3, wherein the connection (4) is right-angled with respect to the casing pipe (7).

5. Tracker controller according to anyone of claims 1-4, the protrusion (9) comprising a bumper (10) made of a shock-absorbing material for protecting the antenna (3).

6. Solar tracker (1) for a photovoltaic installation, the solar tracker (1) comprising a tracking structure supporting solar panels, and providing the solar panels with a tracking rotation for sun tracking;
the solar tracker (1) being **characterized by** further comprising the tracker controller described on anyone of claims 1-5.

7. Photovoltaic installation **characterized by** comprising the solar tracker (1) described on claim 6.

## Patentansprüche

1. Tracker-Steuerung für eine Photovoltaikanlage, wobei die Tracker-Steuerung Folgendes umfasst:
- ein Gehäuse (2), das vorgesehen ist, um an einer Nachführstruktur eines photovoltaischen Trackers (1) der Anlage angebracht zu werden;
- ein innerhalb des Gehäuses (2) untergebrachtes Kommunikationssystem, das vorgesehen ist, um die Tracker (1) miteinander zu kommunizieren; und
- eine externe Antenne (3) für das Kommunikationssystem, wobei die Antenne (3) Folgendes umfasst:
- ein langgestrecktes Mantelrohr (7), und
- eine Drehverbindung (4) an einem Ende des Mantelrohrs (7), die das Mantelrohr (7) von außen mit einem unteren Abschnitt des Gehäuses (2) verbindet, um es dem Mantelrohr (7) zu ermöglichen, sich in Bezug auf das Gehäuse (2) frei um eine Drehachse (6) zu drehen;
wobei die Steuerung **dadurch gekennzeichnet ist, dass** die Antenne (3) ferner einen Vorsprung (9) umfasst, der sich von dem Mantelrohr (7) in der Nähe der Verbindung (4) erstreckt und der so konfiguriert ist, dass er mit dem Gehäuse (2) zusammenstößt, wenn sich die Antenne (3) dreht, um die Drehung des Mantelrohres (7) zu begrenzen.

2. Tracker-Steuerung nach Anspruch 1, wobei die Verbindung (4) mit einem unteren Abschnitt einer vorderen oder hinteren Abdeckung (5) des Gehäuses (2) verbunden ist.

3. Tracker-Steuerung nach einem der Ansprüche 1-2, wobei die Verbindung (4) in Bezug auf das Mantelrohr (7) abgewinkelt ist.

4. Tracker-Steuerung nach Anspruch 3, wobei die Verbindung (4) rechtwinklig zum Mantelrohr (7) ist.

5. Tracker-Steuerung nach einem der Ansprüche 1-4, wobei der Vorsprung (9) einen Stoßfänger (10) umfasst, der aus einem stoßdämpfenden Material zum Schutz der Antenne (3) hergestellt ist.

6. Solar-Steuerung (1) für eine Photovoltaikanlage, wobei die Solar-Steuerung (1) eine Nachführstruktur umfasst, die Sonnenkollektoren trägt und die Sonnenkollektoren mit einer Nachführdrehung zur Sonnennachführung versieht; wobei die Solar-Steuerung (1) **dadurch gekennzeichnet ist, dass** er ferner die in einem der Ansprüche 1-5 beschriebene Tracker-Steuerung umfasst.

7. Photovoltaikanlage, **dadurch gekennzeichnet, dass** sie den in Anspruch 6 beschriebenen Solartracker (1) umfasst.

## Revendications

1. Contrôleur de suiveur pour une installation photovoltaïque, le contrôleur de suiveur comprenant :
- un boîtier (2) destiné à être fixé sur une structure de suivi d'un suiveur photovoltaïque (1) de l'installation ;
- un système de communication logé à l'intérieur du boîtier (2), destiné à faire communiquer les suiveurs (1) entre eux ; et
- une antenne externe (3) pour le système de communication, l'antenne (3) comprenant :
- un tube de tubage allongé (7), et
- un raccord (4) tournant à une extrémité du tube de tubage (7), raccordant extérieurement le tube de tubage (7) à une partie inférieure du boîtier (2), de manière à permettre au tube de tubage (7) de tourner librement par rapport au boîtier (2) autour d'un axe de rotation (6) ;
le contrôleur étant **caractérisé par** l'antenne (3) comprenant en outre une saillie (9), s'étendant depuis le tube de tubage (7) à proximité du raccord (4), et qui est configurée pour venir en butée contre le boîtier (2), lorsque l'antenne (3) tourne, pour limiter la rotation du tube de tubage (7).

2. Contrôleur de suiveur selon la revendication 1, dans lequel le raccord (4) est relié à une partie inférieure d'un couvercle (5) avant ou arrière du boîtier (2).

3. Contrôleur de suiveur selon l'une quelconque des revendications 1 à 2, dans lequel le raccord (4) est coudé par rapport au tube de tubage (7).

4. Contrôleur de suiveur selon la revendication 3, dans lequel le raccord (4) est à angle droit par rapport au tube de tubage (7).

5. Contrôleur de suiveur selon l'une quelconque des revendications 1 à 4, la saillie (9) comprenant un pare-chocs (10) constitué d'un matériau absorbant les chocs pour protéger l'antenne (3).

6. Suiveur solaire (1) pour une installation photovoltaïque, le suiveur solaire (1) comprenant une structure de suivi supportant des panneaux solaires, et fournissant aux panneaux solaires une rotation de suivi pour le suivi du soleil ; le suiveur solaire (1) étant **caractérisé en ce qu'** il comprend en outre le contrôleur de suiveur décrit dans l'une quelconque des revendications 1 à 5.

7. Installation photovoltaïque **caractérisée en ce qu'**elle comprend le suiveur solaire (1) décrit dans la revendication 6.
